Europäisches Patentamt

European Patent Office

Office européen des brevets

(11) Numéro de publication : **0 321 343 B1**

(12) **FASCICULE DE BREVET EUROPEEN**

(45) Date de publication du fascicule du brevet :
25.03.92 Bulletin 92/13

(21) Numéro de dépôt : **88403188.1**

(22) Date de dépôt : **14.12.88**

(51) Int. Cl.⁵ : **F01N 7/08,** F01N 7/18,
F16L 9/18

(51) Int. Cl.⁵ : **F01N 7/08,** F01N 7/18,
F16L 9/18

(54) **Pièce tubulaire d'échappement à deux conduits, en particulier pour véhicule automobile et procédés de fabrication de cette pièce.**

(30) Priorité : **17.12.87 FR 8717649**

(43) Date de publication de la demande :
**21.06.89 Bulletin 89/25**

(45) Mention de la délivrance du brevet :
**25.03.92 Bulletin 92/13**

(84) Etats contractants désignés :
**DE ES GB IT**

(56) Documents cités :
**WO-A-86/03256**
**FR-A- 773 671**
**FR-A- 2 402 767**
**GB-A- 19 486**
**US-A- 2 550 725**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Gratadour, Jean**
**29, rue du Maréchal Foch**
**F-95150 Taverny (FR)**

(74) Mandataire : **Bouget, Lucien et al**
**Cabinet Lavoix 2, Place d'Estienne d'Orves**
**F-75441 Paris Cédex 09 (FR)**

**Description**

L'invention concerne une pièce tubulaire d'échappement à deux conduits destinée en particulier à un véhicule automobile.

Dans les moteurs à pistons des véhicules automobiles, on cherche à favoriser le remplissage à l'admission et la vidange à l'échappement des cylindres, par des effets acoustiques. Sur les moteurs à plusieurs cylindres, cela peut être réalisé en raccordant les échappements de chaque cylindre d'une manière déterminée en utilisant des tubulures de section et de longueur soigneusement choisies.

Par exemple, dans le cas d'un moteur à quatre cylindres, on peut raccorder entre elles tout d'abord les tubulures d'échappement des cylindres 1 et 3 d'une part et 2 et 4 d'autre part, pour les faire déboucher dans deux conduits distincts qui sont eux-mêmes réunis en un seul conduit après un certain parcours.

Ce type de montage nécessite la présence de deux conduits qui cheminent en parallèle sur une certaine longueur qui peut être relativement importante.

Dans le but de simplifier le montage et de réduire l'encombrement de l'échappement, on a proposé d'utiliser une pièce d'échappement tubulaire à deux conduits, aussi appelée "tube siamois", qui peut être réalisée sous forme droite et ensuite déformée, par exemple par cintrage, avant d'être montée sur le véhicule. La mise en forme et la pose des deux conduits sont donc réalisées simultanément.

La pièce tubulaire à deux conduits peut être constituée par une enveloppe externe tubulaire et par une cloison de séparation disposée suivant la longueur de l'enveloppe tubulaire et fixée sur cette enveloppe par ses côtés latéraux. Un tel dispositif est décrit, dans le WO-A-8603256, dans le cas d'une réalisation particulière. L'assemblage de l'enveloppe externe et de la cloison est généralement réalisé par soudage.

Un tel dispositif présente de nombreux avantages par rapport à l'utilisation de deux conduits séparés disposés en parallèle. Le découplage de l'échappement et du moteur (rotulage) est plus simple, en particulier dans le cas des moteurs transversaux. Le dispositif présente également une meilleure tenue mécanique ; son implantation est facilitée dans la mesure où il est souvent plus facile de faire passer un gros tube que deux petits tubes en parallèle le long de la caisse du véhicule ; enfin, la conception et donc la fabrication du dispositif à deux conduits est beaucoup plus simple, ce qui entraîne des coûts réduits.

En revanche, les pièces d'échappement à deux conduits de ce type présentent l'inconvénient d'émettre des bruits à un niveau sonore important, à cause de la présence de la cloison de séparation ou âme qui a tendance à vibrer sous l'effet des pressions différentes auxquelles sont soumises ses deux faces. En se déformant, l'âme entraîne l'enveloppe tubulaire en vibration, ce qui se traduit par une émission de bruit d'autant plus importante qu'on se trouve la plupart du temps en présence de phénomènes de résonance.

Jusqu'ici, aucune solution satisfaisante n'a pu être trouvée, si bien que l'utilisation des pièces d'échappement à deux conduits malgré leurs très nombreux avantages risque d'être abandonnée, à cause du haut niveau sonore de l'échappement obtenu.

Dans le cas de conduits utilisés dans des appareils d'échange de chaleur, (US-A-2.550.725 et FR-A-773.671), on a prévu l'utilisation de parois de séparation du volume interne des conduits constituées par des plaques accolées ou disposées avec un faible écartement. Cependant, de telles parois de séparation sont montées de manière qu'elles ne peuvent produire aucun amortissement d'ondes acoustiques. Cette fonction n'est d'ailleurs aucunement envisagée.

Le but de l'invention est donc de proposer une pièce tubulaire d'un échappement d'un véhicule automobile à deux conduits comportant une enveloppe externe tubulaire et une cloison de séparation du volume interne de l'enveloppe en deux conduits continus disposée suivant la longueur de l'enveloppe et soudée sur l'enveloppe par ses côtés latéraux, cette pièce d'échappement ayant en fonctionnement un faible niveau d'émission acoustique.

Dans ce but, la cloison est constituée par au moins deux plaques superposées fixées entre elles suivant une partie seulement de leurs surfaces de jonction superposées et qui glissent l'une sur l'autre suivant leurs surfaces de jonction lors de déformations en flexion.

Afin de bien faire comprendre l'invention, on va maintenant décrire à titre d'exemple non limitatif, en se référant aux figures jointes en annexe, plusieurs modes de réalisation d'une pièce d'échappement suivant l'invention.

La figure 1 est une vue schématique d'un moteur à quatre cylindres ayant un dispositif d'échappement bi-tubes suivant l'art antérieur.

La figure 2 est une vue en perspective d'une portion d'une pièce tubulaire à deux conduits suivant l'art antérieur.

La figure 3 est une vue en coupe transversale de la pièce tubulaire à deux conduits représentée sur la figure 2.

La figure 4 est une vue schématique montrant le mécanisme de l'émission acoustique d'une pièce d'échappement à deux conduits suivant l'art antérieur.

La figure 5 est une vue en coupe transversale d'une pièce tubulaire à deux conduits suivant l'invention et suivant un premier mode de réalisation.

Les figures 6a et 6b sont des vues de détail à plus grande échelle de la paroi de séparation de la pièce d'échappement représentée sur la figure 6, cette paroi de séparation étant dans un état non déformé et dans un état déformé par flexion, respectivement.

La figure 7 est une vue en coupe tranversale d'une pièce tubulaire à deux conduits suivant l'invention et suivant un second mode de réalisation.

La figure 8 est une vue en perspective de la cloison de séparation de la pièce d'échappement à deux conduits représentée sur la figure 7.

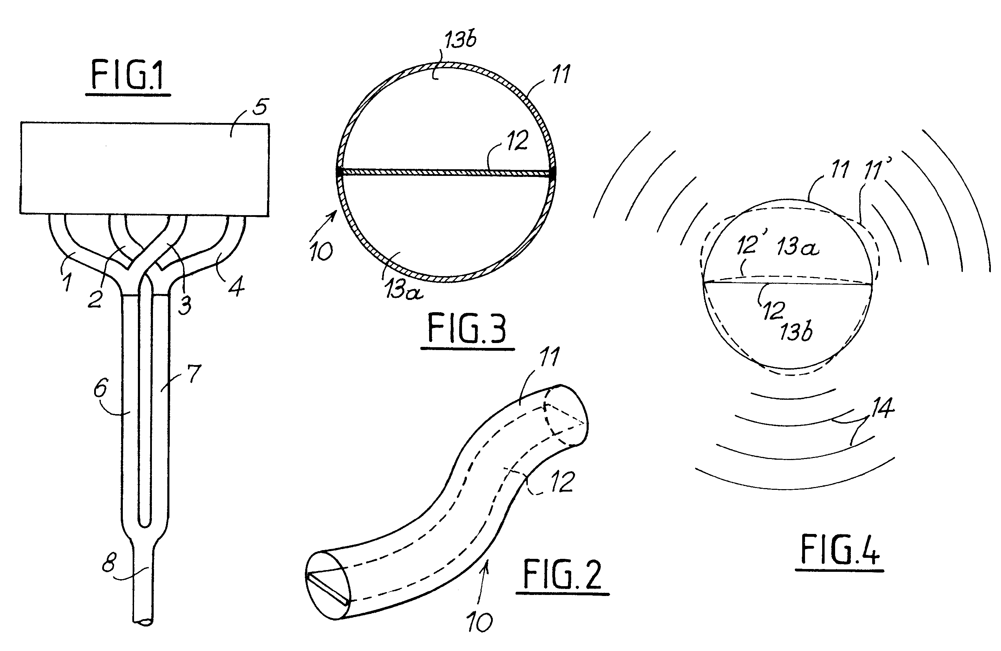

Sur la figure 1, on voit un moteur 5 à quatre cylindres d'un véhicule automobile comportant des tubulures d'échappement 1, 2, 3 et 4 reliées respectivement au premier, au second, au troisième et au quatrième cylindres. Les tubulures 1 et 3 sont reliées à un premier conduit 6 alors que les tubulures 2 et 4 sont reliées à un second conduit 7, les conduits 6 et 7 étant disposés parallèlement suivant la longueur de la caisse du véhicule, pour déboucher dans un conduit commun 8 qui est lui-même relié au pot d'échappement du véhicule. Une telle disposition favorise le remplissage et la vidange des cylindres par effet acoustique. Cependant, la nécessité de prévoir deux conduits parallèles 6 et 7 complique la construction et la pose du système d'échappement du véhicule.

On a donc conçu des pièces tubulaires d'échappement à deux conduits destinées à remplacer des conduits disposés en parallèle tels que les conduts 6 et 7.

Une pièce tubulaire à deux conduits selon l'art antérieur va être décrite en se référant aux figures 2 et 3. La pièce d'échappement désignée de manière générale par le repère 10 réalisée sous forme tubulaire droite peut être déformée par la suite, par cintrages successifs comme représenté sur la figure 2, pour s'accomoder à toute forme de passage sous la caisse du véhicule. Cette pièce 10 comporte une enveloppe tubulaire 11 et une cloison de séparation diamétrale 12 constituée par une plaque plane rectangulaire allongée soudée suivant ses bords latéraux, le long de deux génératrices de l'enveloppe 11 suivant lesquelles l'enveloppe 11 constituée de deux demicoquilles semi-cylindriques est elle-même assemblée. La paroi de séparation 12 délimite deux conduits 13a et 13b à section semi-circulaire à l'intérieur de l'enveloppe 11.

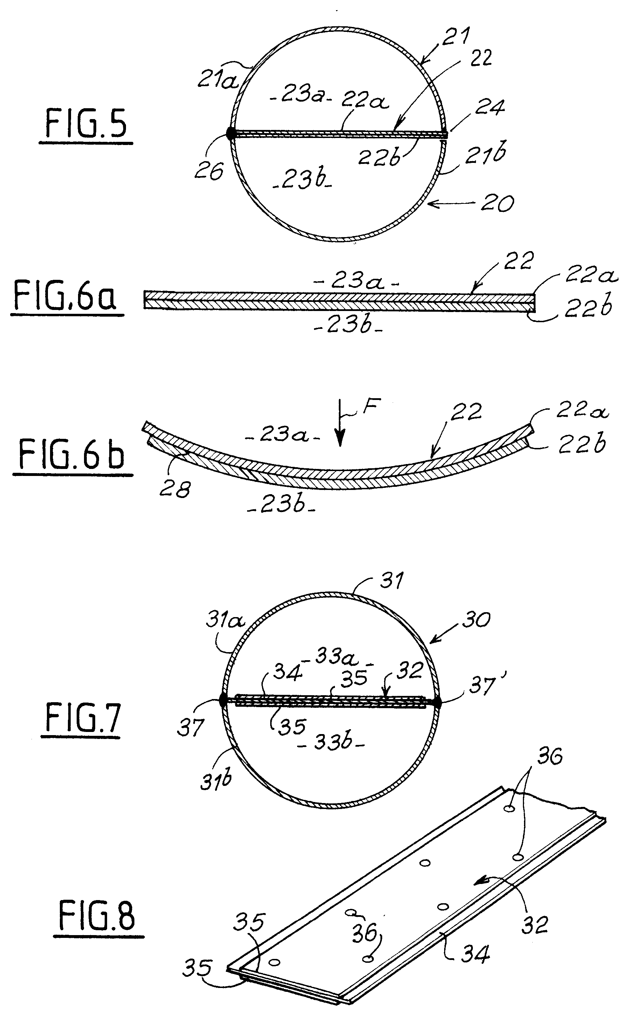

Comme il est visible sur la figure 4, pendant le fonctionnement du dispositif d'échappement, la paroi de séparation 12 entre en vibration à cause des pressions différentes régnant dans les conduits 13a et 13b et se déforme par flexion, comme représenté en 12'. La cloison 12 ou âme entraîne l'enveloppe tubulaire 11 en vibration, cette enveloppe 11 subissant des déformations telles que représentées en 11'. Il en résulte une émission d'ondes acoustiques 14 se traduisant par un haut niveau de bruit.

Sur la figure 5, on a représenté, en coupe transverale, une pièce tubulaire 20 à deux conduits 23a, 23b.

Cette pièce tubulaire 20 comporte une enveloppe 21 constituée par deux demi-coquilles semi-cylindriques 21a, 21b juxtaposées et soudées suivant deux génératrices de l'enveloppe 21.

La cloison de séparation 22 entre les conduits 23a et 23b est constituée par deux plaques planes rectangulaires superposées 22a et 22b. Les deux plaques 22a et 22b ont une longueur correspondant à la longueur de l'enveloppe tubulaire 21 et sont soudées, suivant leurs bords latéraux juxtaposés, le long des génératrices de raccordement des demi-coquilles 21a et 21b. On a représenté en 24 la disposition des plaques 22a, 22b et des coquilles 21a et 21b avant soudure. Les bords latéraux mis en concordance des plaques 22a et 22b sont pincés entre les deux bords de raccordement des demi-coquilles 21a et 21b et la soudure est effectuée, sans métal d'apport, par fusion des bords en concordance. Il est à remarquer que le soudage des deux plaques 22a, 22b parfaitement juxtaposées sur les demi-coquilles 21a, 21b est une opération qui ne présente pas plus de difficultés que le soudage d'une seule plaque de séparation telle que la plaque 12 représentée sur la figure 3.

On a représenté également sur la figure 5 le joint de soudure 26 réalisé suivant une génératrice de l'enveloppe 21 et assurant à la fois la jonction des deux demi-coquilles 21a, 21b, des deux plaques 22a et 22b et de la cloison 22 sur l'enveloppe 21. Il est bien évident qu'un joint soudé identique au joint 26 est réalisé pour l'assemblage dans la zone 24.

La cloison de séparation 22 est donc constituée de deux plaques superposées reliées uniquement suivant leurs bords latéraux.

Lorsque l'échappement est en fonctionnement, la cloison 22 est soumise à une force de flexion alternative F due à la différence de pression dans les conduits 23a et 23b, comme représenté sur la figure 6b. La cloison 22 est mise en vibration et se déforme pour passer de la forme plane représentée sur la figure 6a à une forme fléchie comme représenté sur la figure 6b, de manière alternative et dans les deux sens.

Au cours de leur flexion, les plaques 22a et 22b subissent un glissement relatif dans le plan de contact 28.

Ce glissement est possible puisque les plaques 22a et 22b ne sont rendues solidaires que par leurs bords latéraux. Ce glissement relatif s'accompagne d'un frottement qui entraîne un amortissement des vibrations de la cloison de séparation 22 et donc de l'enveloppe 21.

On obtient donc ainsi une diminution sensible de l'émission acoustique et des bruits produits par la pièce d'échappement en fonctionnement.

On pourra remarquer que le frottement des plaques l'une sur l'autre n'est pas le seul phénomène permettant un amortissement des vibrations. Un certain amortissement peut être produit par des déformations microplastiques dans les zones de contact entre les plaques et en particulier autour des joints de soudure. Cet amortissement peut être accru par la présence de points de soudure, par exemple disposés à intervalles réguliers et joignant localement les plaques 22a et 22b.

On peut également favoriser l'amortissement en introduisant une couche fortement amortissante entre les plaques 22a et 22b avant leur soudage. Tous ces procédés permettent d'augmenter l'absorption d'énergie au cours d'un cycle de déformation et donc l'amortissement des vibrations.

La pièce d'échappement à deux conduits représentés sur la figure 5 peut être réalisée sans qu'il soit nécessaire d'assembler de manière préalable les plaques 22a et 22b constituant la cloison 22.

Sur les figures 7 et 8, on a représenté une pièce d'échappement 30 à deux conduits 33a, 33b, suivant un second mode de réalisation de l'invention. La pièce d'échappement 30 comporte une enveloppe 21 constituée par deux demi-coquilles semi-cylindriques 31a, 31b assemblées par soudure et une cloison de séparation 32 constituée de plusieurs plaques juxtaposées et pré-assemblées avant le soudage de la cloison 32 sur l'enveloppe tubulaire 31.

La cloison 32 est constituée par une plaque centrale 34 de part et d'autre de laquelle sont rapportées deux plaques 35 pré-assemblées à la plaque 34 par des points de soudure électrique 36 disposés à intervalles réguliers sur les plaques 35. La plaque centrale 34 a une largeur supérieure à la largeur des plaques 35 et correspondant sensiblement au diamètre extérieur de l'enveloppe 31.

Lors du pré-assemblage de la cloison 32, on ménage, suivant chacun des bords latéraux de la plaque centrale 34, deux zones non recouvertes par les plaques 35, suivant lesquelles on réalisera l'assemblage de la cloison 32 et de l'enveloppe 31.

Comme dans le cas d'une pièce d'échappement à simple cloison représentée sur la figure 3, les parties latérales de la plaque 34 sont engagées entre les génératrices d'assemblage des demi-coquilles 31a et 31b et des joints de soudure 37, 37′ permettent d'assurer à la fois la jonction des deux demi-coquilles 31a et 31b entre elles et de la cloison 32 avec l'enveloppe 31.

Le fonctionnement du dispositif est similaire à ce qui a été décrit plus haut, les plaques 35 pouvant subir un léger glissement par rapport à la plaque 34, lors de sa mise en vibration par flexion alternée de la cloison 32.

Les plaques 35 et la plaque centrale 34 peuvent être assemblées de diverses manières pour la réalisation préalable de la cloison 32. On peut par exemple assurer cet assemblage par soudage à la molette ou tout autre type de soudure ou encore par agrafage, rivetage, collage ou tout autre procédé permettant de réaliser des jonction localisées laissant une certaine latitude de déplacement relatif par glissement des plaques assemblées.

L'invention présente donc l'avantage d'assurer un bon amortissement des vibrations et une diminution importante des émissions acoustiques de la pièce d'échappement en fonctionnement, malgré une réalisation très simple et peu coûteuse.

Ces pièces d'échappement peuvent être obtenues en modifiant très peu le processus de fabrication habituellement utilisé pour les pièces d'échappement à deux conduits à paroi de séparation simple.

D'autre part, l'enveloppe tubulaire de la pièce n'est pas modifiée si bien que la résistance mécanique et l'endurance à la fatigue de la pièce ne sont pas modifiées.

Il est bien évident que l'invention ne se limite pas au mode de réalisation qui a été décrit.

Le nombre de plaques superposées pour constituer la cloison peut être quelconque et en particulier supérieur à trois, en fonction de l'objectif à atteindre et en particulier en fonction du niveau d'amortissement souhaité.

Quel que soit le nombre de plaques constituant la cloison qui peuvent être pré-assemblées ou non, on pourra réaliser en une seule opération de soudage, l'assemblage de l'enveloppe et la fixation de la cloison.

L'invention s'applique à toute pièces d'échappement tubulaire à deux conduits pour un moteur à explosion.

## Revendications

1. Pièce tubulaire d'un échappement d'un véhicule automobile à deux conduits (23a, 23b, 33a, 33b) comportant une enveloppe externe (21, 31) tubulaire et une cloison de séparation (22, 32) du volume interne de l'enveloppe (21, 31) en deux conduits continus (23a, 23b, 33a, 33b) disposée suivant la longueur de l'enveloppe (21, 31) et soudée sur l'enveloppe (21, 31) par ses côtés latéraux, caractérisée par le fait que la cloison (22, 32) est constituée par au moins deux plaques superposées fixées entre elles suivant une partie seulement de leurs surfaces de jonction superposées et qui glissent l'une sur l'autre suivant leurs surfaces de jonction lors de déformations en flexion.

2. Pièce d'échappement suivant la revendication 1, caractérisée par le fait que la cloison de séparation (22) est constituée par au moins deux plaques planes (22a, 22b) dont les bords latéraux mis en coïncidence sont assemblés entre eux et à l'enveloppe tubulaire (21), suivant deux génératrices de l'enveloppe (21) par un joint de soudure (26).

3. Pièce d'échappement suivant la revendication 2, caractérisée par le fait que les plaques (22a, 22b) comportent des zones de jonction entre elles différentes des joints de soudure (26).

4. Pièce d'échappement suivant la revendication 2, caractérisée par le fait qu'une couche de matière amortissante est intercalée entre les plaques (22a, 22b).

5. Pièce d'échappement suivant la revendication 1, caractérisée par le fait que la cloison (32) est constituée par une plaque centrale (34) sur chacune des faces de laquelle est fixée une plaque (35) par des zones de jonction espacées (36), les plaques (35) ayant une largeur inférieure à la plaque (34) qui comporte deux rebords latéraux non recouverts par les plaques (35), suivant lesquels la plaque (34) est assemblée à l'enveloppe (31).

6. Pièce d'échappement suivant la revendication 5, caractérisée par le fait que la jonction entre les plaques (35) et la plaque (34) est réalisée par l'un des procédés suivants : soudure par points, soudage à la molette, agrafage, rivetage, collage.

7. Procédé de fabrication d'une pièce d'échappement selon la revendication 1, caractérisé par le fait :
– qu'on élabore deux demi-coquilles semi-cylindriques (21a, 21b) en tôle métallique,
– qu'on élabore deux plaques planes en tôle métallique (22a, 22b) ayant pour longueur la longueur des demi-coquilles (21a, 21b) et pour largeur le diamètre extérieur des coquilles (21a, 21b),
– et qu'on assemble par soudage les deux demi-coquilles (21a, 21b) juxtaposées suivant deux génératrices et les deux plaques (22a, 22b) superposées, par soudage des bords latéraux des plaques (22a, 22b) et des génératrices d'assemblage des coquilles (21a, 21b) en une seule opération.

8. Procédé de fabrication d'une pièce d'échappement suivant la revendication 1, caractérisé par le fait :
– qu'on élabore deux demi-coquilles semi-cylindriques en tôle métallique (31a, 31b),
– qu'on élabore une cloison (32) ayant pour longueur la longueur des demi-coquilles (31a, 31b) et pour largeur le diamètre extérieur des demi-coquilles (31a, 31b), par superposition et pré-assemblage d'une plaque centrale (34) et de plaques (35) fixées sur chacune des faces de la plaque (34) ayant une largeur inférieure à la largeur de la plaque (34),
– et qu'on assemble par soudage les deux demi-coquilles semi-cylindriques suivant deux génératrices de jonction et la plaque (34) suivant ses bords latéraux non recouverts par les plaques (35), en une seule opération de soudage.

**Claims**

1. A tubular part of an exhaust of a motor vehicle with two ducts (23a, 23b, 33a, 33b) comprising a tubular external shell (21, 31) and a partition (22, 32) for separating the internal space of the shell (21, 31) into two continuous ducts (23a, 23b, 33a, 33b) disposed along the length of the shell (21, 31) and welded onto the shell (21, 31) at its lateral ends, characterized in that the partition (22, 32) is formed by at least two superposed plates fixed together along only a part of their superposed jointing surfaces and which slide on each other along their surfaces during flexural deformations.

2. An exhaust part according to claim 1, characterized in that the separating partition (22) is formed by at least two flat plates (22a, 22b) whose coincident side edges are joined together and to the tubular shell (21) along two generatrices of the shell (21) by a weld (26).

3. An exhaust part according to claim 2, characterized in that the plates (22a, 22b) include jointing zones between them that are different from the welds (26).

4. An exhaust part according to claim 2, characterized in that a layer of a damping material is interposed between the plates (22a, 22b).

5. An exhaust part according to claim 1, characterized in that the partition (32) is formed by a central plate (34), onto each side whereof, there is fixed a plate (35) at interspaced jointing zones (36), the plates (35) having a smaller width than the plate (34) which comprises two side edges not covered by the plates (35) along which the plate (34) is joined to the shell (31).

6. An exhaust part according to claim 5, characterized in that the joint between the plates (35) and the plate (34) is obtained by means of one of the following processes: spot welding, seam welding, welting, riveting, bonding.

7. A process for manufacturing an exhaust part according to claim 1, characterized in that
– one prepares two semicylindrical half-shells (21a, 21b) of sheet metal,
– one prepares two flat sheet metal plates (22a, 22b) having the length of the two half-shells (21a, 21b) as their lengths and the external diameter of the shells (21a, 21b) as their widths,
– one joins by welding the two half-shells (21a, 21b) juxtaposed along two generatrices and the two superposed plates (22a, 22b) by welding the side edges of the plates (22a, 22b) and the jointing generatrices of the shells (21a, 21b) in a single operation.

8. A process for manufacturing an exhaust part according to claim 1, characterized in that
– one prepares two semicylindrical half-shells (31a, 31b) made of sheet metal,
– one prepares a partition (32) having the length of the half-shells (31a, 31b) as its length and the external diameter of the half-shells (31a, 31b) as its width, by the superposition and preassembly of a central plate (34) and of plates (35) fixed onto each side on the plate (34), having a smaller width than the width of the plate (34),

– and that one joins by welding the two semicylindrical half-shells along two jointing generatrices, and the plate (34) along its side edges not covered by the plate (35), in a single welding operation.

**Patentansprüche**

1. Rohrförmiges Auslaßstück mit zwei Leitungen (23a, 23b, 33a, 33b) für ein kraftfahrzeug, bestehend aus einem äußeren rohrförmigen Mantel (21, 31) und einer Trennwand (22, 32), die das Innenvolumen des Mantels (21, 31) in zwei kontinuierliche Leitungen (23a, 23b, 33a, 33b) trennt, in der Länge des Mantels (21, 31) angeordnet ist und an ihren Seiten an dem Mantel (21, 31) angeschweißt ist, dadurch gekennzeichnet, daß die Trennwand (22, 32) aus wenigstens zwei aufeinandergelegten Platten besteht, die nur auf einem Teil ihrer aufeinanderliegenden Verbindungsflächen aneinander befestigt sind und bei Biegeverformungen an ihren Verbindungsflächen aufeinander gleiten.

2. Auslaßstück nach Anspruch 1, dadurch gekennzeichnet, daß die Trennwand (22) aus wenigstens zwei ebenen Platten (22a, 22b) besteht, deren zur Deckung gebrachten Seitenränder aneinander und,längs zwei Erzeugenden des rohrförmigen Mantels (21),an dem Mantel (21) durch eine Schweißnaht (26) befestigt sind.

3. Auslaßstück nach Anspruch 2, dadurch gekennzeichnet, daß die Platten (22a, 22b) Zonen der gegenseitigen Verbindung aufweisen, die nicht die Schweißnähte (26) sind.

4. Auslaßstück nach Anspruch 2, dadurch gekennzeichnet, daß eine Schicht aus einem dämpfenden Werkstoff zwischen die Platten (22a, 22b) gelegt ist.

5. Auslaßstück nach Anspruch 1, dadurch gekennzeichnet, daß die Trennwand (32) aus einer zentralen Platte (34) besteht, auf jeder deren Seiten eine Platte (35)in voneinander entfernt angeordneten Verbindungszonen (36) befestigt ist, wobei die Platten (35) eine kleinere Breite als die Platte (34) besitzen, die zwei seitliche Ränder aufweist,die nicht durch die Platten (35) abgedeckt sind und längs denen die Platte (34) an dem Mantel (31) befestigt ist.

6. Auslaßstück nach Anspruch 5, dadurch gekennzeichnet, daß die Verbindung zwischen den Platten (35) und der Platte (34) in einem der folgenden Verfahren hergestellt ist: Punktschweißen, Rollennahtschweißen, Verklammern, Vernieten, Verkleben.

7. Verfahren zur Herstellung eines Auslaßstücks nach Anspruch 1, dadurch gekennzeichnet,

– daß zwei halbzylindrische Schalenhälften (21a, 21b) aus Metallblech hergestellt werden,

– daß zwei ebene Platten (22a, 22b) aus Metallblech hergestellt werden, deren Länge die Länge der Schalenhälften (21a, 21b) und deren Breite der Außendurchmesser der Schalen (21a, 21b) ist, und

– daß die beiden längs zwei Erzeugenden aneinandergesetzten Schalenhälften (21a, 21b) und die beiden aufeinandergelegten Platten (22a, 22b) in einem einzigen Arbeitsgang durch Verschweißen verbunden werden, indem die Seitenränder der Platten (22a, 22b) und die Verbindungserzeugenden der Schalen (21a, 21b) verschweißt werden.

8. Verfahren zur herstellung eines Auslaßstücks nach Anspruch 1, dadurch gekennzeichnet,

– daß zwei halbzylindrische Schalenhälften (31a, 31b) aus Metallblech hergestellt werden,

– daß eine Trennwand (32), deren Länge die Länge der Schalenhälften (31a, 31b) und deren Breite der Außendurchmesser der Schalenhälften (31a, 31b) ist, durch Übereinanderlegen und Vorbefestigen einer zentralen Platte (34) und von Platten (35) hergestellt wird, die auf jeder Seite der Platte (34) befestigt sind und eine kleinere Breite als die Platte (34) besitzen, und

– daß die beiden halbzylindrischen Schalenhälften längs zweier Verbindungserzeugenden und die Platte (34) längs ihrer nicht von den Platten (35) bedeckten Seitenränder in einem einzigen Arbeitsgang verschweißt werden.

# FIG.1

5

1 2 3 4

6 7

8

# FIG.3

13b

11

12

10

13a

# FIG.2

11

12

10

# FIG.4

11 11'

12' 13a

12 13b

14

EP 0 321 343 B1

FIG.5

FIG.6a

FIG.6 b

FIG.7

FIG.8